# EUROPÄISCHE PATENTSCHRIFT

(11) **EP 1 679 998 B1**
(45) Veröffentlichungstag und Bekanntmachung des Hinweises auf die Patenterteilung: **06.06.2007**
(21) Anmeldenummer: 05707015.3
(22) Anmeldetag: 26.01.2005
(51) Int. Cl.: A47J 42/34

(54) **VORRICHTUNG ZUR ABGABE KLEINERER MENGEN EINES STOFFES**
DEVICE FOR DISPENSING SMALL AMOUNTS OF A MATERIAL
DISPOSITIF POUR DISTRIBUER DE PETITES QUANTITES D'UNE MATIERE

(30) Priorität: 28.01.2004 DE 20040013 U
(43) Veröffentlichungstag der Anmeldung: 19.07.2006
(73) Patentinhaber: Volker, Wagner, 22765 Hamburg (DE)
(72) Erfinder: Volker, Wagner, 22765 Hamburg (DE)
(74) Vertreter: Glaeser, Joachim
(86) Internationale Anmeldenummer: PCT/EP2005/000744
(87) Internationale Veröffentlichungsnummer: WO 2005/072588

(56) Entgegenhaltungen:
- GB-A- 631 241
- GB-A- 191 005 003
- GB-A- 191 304 115
- US-A- 2 190 105

## Beschreibung

Die Erfindung bezieht sich auf eine Vorrichtung zur dosierten Abgabe kleinerer Mengen eines Stoffes mit einem Gehäuse für den Stoff und einer nach außen führenden Öffnung für die Abgabe des Stoffes.

Eine ähnliche vorrichtung ist jetzt bekannt aus US 2 190 105.

Die vorliegende Erfindung ist insbesondere auf eine solche Vorrichtung gerichtet, mit der Speisesalz ausgegeben werden kann. Es kann sich also um einen Speisesalzspender handeln.

Speisesalzspender bestehen grundsätzlich aus einem festen Gehäuse mit einer oder mehreren Öffnungen, so dass das sich im Inneren des Gehäuses befindliche körnige Speisesalz durch die Öffnungen ausgegeben werden kann. Speisesalz wird nach der Aufbereitung verpackt oder in Gehäuse abgefüllt, zum Verkauf gebracht und gelangt von dort zum Verbraucher. Dieser kann das Gehäuse als Salzspender verwenden, er kann das Salz in ein anderes Gehäuse tun oder aber das Gehäuse entsorgen, wenn es geleert worden ist.

Hier nun setzt die vorliegende Erfindung mit die Merkmale des Anspruchs 1 an und will eine Vorrichtung der eingangs genannten Art in neuer Gestalt und anderer Anwendung realisieren. Insbesondere soll eine Vorrichtung im Zusammenhang mit dem Einsatz von Speisesalz geschaffen werden.

Erreicht wird dies durch eine Vorrichtung zur dosierten Abgabe kleinerer Mengen eines Stoffes mit einem Gehäuse für den Stoff und einer nach außen führenden Öffnung für die Abgabe des Stoffes.

Bei der vorliegenden Erfindung ist im eigentlichen Sinne kein Gehäuse für das auszugebende Material vorgesehen. Das Material selbst übernimmt in der angegebenen Form die Aufgabe des Gehäuses, was voraussetzt, dass der Stoff sich selbst in eine kompakte Form bringen lässt oder diese von Hause aus hat. Speisesalz, das im Berg abgebaut wird, hat von vornherein diese Blockform, so dass im Zusammenhang mit dem Einsatz der Vorrichtung gemäß der Erfindung eine Reihe von Arbeitsvorgängen bei der Aufbereitung entfallen. Die natürlich aufgefundene Form des Salzkristallblockes kann aber auch in eine andere Form gebracht werden, wobei aus Gründen der besseren Handhabung und auch der Ästhetik die Kugel- oder die Eiform eine besondere Bedeutung für die vorliegende Erfindung haben.

Es liegt im Rahmen der Erfindung, auch andere Stoffe in die gewünschte feste Form eines Blockes zu bringen, so dass sie die Funktion eines Gehäuses mit übernehmen. Beispielsweise lassen sich Zuckerkristalle in Kugelform bringen, so dass mit Hilfe eines geeigneten Werkzeuges ein solcher Block nach und nach in die gewünschte Menge rieselfähigen Zuckers überführt werden kann. Es ist auch daran gedacht, Gewürzmischungen, Wurzeln und dgl. in die entsprechende Form zu bringen.

Ein weiteres für die vorliegende Erfindung wesentliches Merkmal ist eine Öffnung, die in den inneren Bereich des Blockes führt. Im anfänglichen Gebrauch der Vorrichtung handelt es sich hierbei um eine Bohrung geringer Tiefe, die jedoch so ausgestaltet ist, dass das vorgesehene Werkzeug hier eingeführt oder eingesteckt werden kann. Im Laufe des Gebrauchs wird dieser Hohlraum zunehmend vergrößert, und zwar so weit, dass letztendlich der Block seine anfängliche Form verliert und gar zerstört wird. Die Reste, die dann verbleiben, könnten zum Verzehr nicht mehr geeignet sein und müssen also nicht für Speisen verwendet werden.

Der mit Aktor bezeichnete Teil der vorliegenden Erfindung kann in der einfachsten Form als Reibe, Feile, Fräser oder Raspel ausgebildet werden. Eine Raspel beispielsweise wird in die Öffnung des Blockes eingeführt und durch geeignete Bewegungen der Raspel wird das Material im Inneren des Blockes abgetragen und über die Öffnung ausgegeben.

Als Aktor sind alle Werkzeuge denkbar, die einen solchen Materialabtrag bewerkstelligen können. Es ist hierbei nicht wesentlich, ob beispielsweise bei der Anwendung der Erfindung auf Speisesalz Salzkristalle lediglich gelöst werden oder Kristalle durch Stoßbewegungen zerkleinert werden. Wichtig ist, dass durch einfache, von Hand auszuführende Bewegungen der Materialabtrag ohne weitere Mittel realisiert werden kann, wenngleich auch motorische Antriebe im Zusammenhang mit der Erfindung eingesetzt werden können.

Bei einer speziellen Anwendung der Erfindung besteht der Stoff aus einem Speisesalzkörper, der von Haus aus außen eine feste Oberfläche hat, so dass dieser Körper ohne Weiteres mit einer Hand einer Person erfasst werden kann. Der Aktor in Form einer Raspel wird in die Öffnung eingeführt und über Drehbewegungen beispielsweise wird die Materialabtragung bewerkstelligt.

Der Aktor kann auch mit einer Lichtquelle versehen sein, so dass besser zu erkennen ist, wo Material, das durchscheinend oder lichtdurchlässig ist, abgetragen wird, bevorzugt ist hier an eine Batterie gespeiste LED gedacht.

Es liegt im Rahmen der Erfindung, den Aktor so anzusetzen, dass er vornehmlich Material vom äußeren Bereich des Blocks abträgt. Auch kann der Materialblock, wenn er einen genügend großen Hohlraum aufweist, als "Lampenschirm" eingesetzt werden, wenn er hinlänglich transparent ist.

Die Erfindung wird nachstehend anhand der Zeichnungen beispielsweise erläutert.
- Figur 1: zeigt eine Schnittansicht durch eine Vorrichtung gemäß der Erfindung in der Ausführungsform eines Salzspenders.
- Figur 2: zeigt eine andere Ausführungsform eines Salzspenders nach der Erfindung.

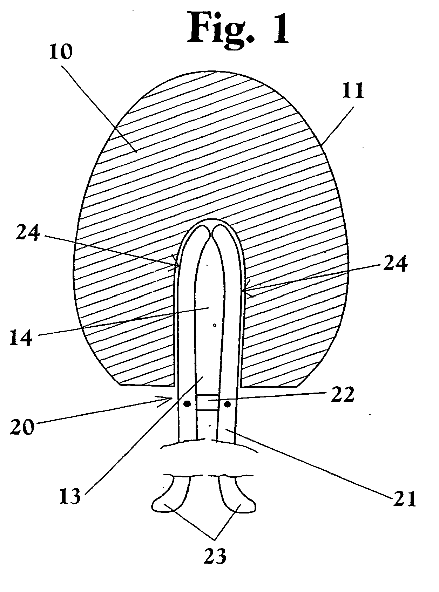

In Figur 1 ist mit 10 ein eiförmiger Block gezeigt, der aus Salzkristall besteht und über Formvorgänge diese Eiform erhalten hat. Mit 11 ist die äußere Oberfläche bezeichnet, die so fest und stabil ist, dass man den Körper 10 ohne Weiteres anfassen kann, ohne dass Salzkristalle sich dabei von dem Block 10 lösen.

Im unteren Bereich ist der Block 10 angeflacht ausgeführt und weist eine mit 13 bezeichnete Öffnung auf.

In Figur 1 ist die Vorrichtung gemäß der Erfindung nach einem gewissen Gebrauch gezeigt worden, was daran zu erkennen ist, dass die Öffnung 13 in einen mehr oder weniger großen Hohlraum 14 übergegangen ist. Im Hohlraum sind zwei raspelartige Teile 21 des Aktors 20 gezeigt. Es liegt auf der Hand, anstelle von zwei gegenüberliegenden Raspeln 21 drei über den Umfang verteilte Raspeln einzusetzen oder eine beliebig größere Anzahl. Wesentlich ist, dass die Raspeln im Inneren des Blocks mit ihren reibungserhöhenden Oberflächen 24 auf das Material des Blockes derartig einwirken, dass dort Material abgetragen wird und im gezeigten Ausführungsbeispiel nach unten herausfallen kann. Denkbar ist, dass die Vorrichtung in einer um 180° nach oben verschwenkten Lage eingesetzt wird und erst nachdem Material abgetragen worden ist, in die in der Figur gezeigten Lage gebracht wird, so dass das abgetragene Material nach unten herausfallen kann.

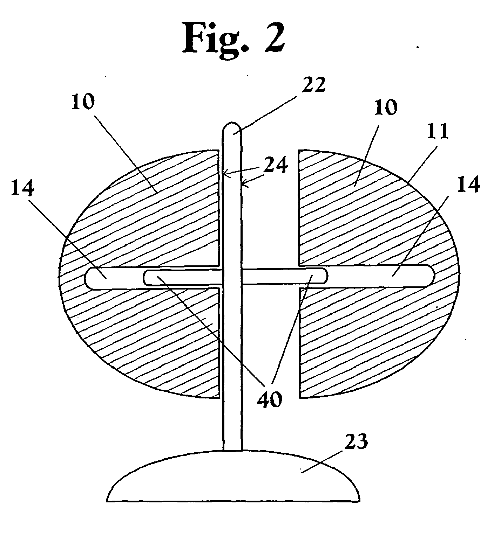

In der Ausführungsform nach Figur 2 haben entsprechende Teile die gleichen Bezugszeichen wie in Figur 1 bekommen.

Vom Fuß 23 steht eine Reibscheibe vor, die beispielsweise kreisförmig ausgestaltet ist und auf beiden Seiten mit reibungserhöhenden Oberflächen 24 versehen ist.

Außerdem stehen zwei Führungsstifte 40 in der Mitte der Scheibe vor. Diese werden in die Öffnungen 14 der Salzkristallblöcke 10 eingeführt.

Der linksseitig gezeigte Block 10 befindet sich in Arbeitsstellung und wenn man diesen von außen her erfasst und um den Stift 14 dreht, kann Material von der Grundfläche des Blockes 10 abgetragen werden.

Der rechtsseitig gezeigte Block 10 befindet sich in einer Art Vorbereitungsstellung.

Die Reibscheibe 24 kann im oberen Bereich mit einer Art Abdeckung versehen sein, um zu verhindern, dass man sich verletzen kann.

In den Figuren sind die beiden Raspeln aneinander über einen Teil 22 befestigt und sind nach unten hin mit einem Fuß 23 ausgebildet, die zugleich als Handgriff verwendet werden kann. Durch Drehen des Handgriffs 23 werden die Raspeln mit ihren reibungserhöhenden Oberflächen 24 relativ zum Block 10 in Drehung versetzt, so dass in gewünschter Weise und Menge Material abgetragen werden kann.

Die in den Figuren gezeigten Raspeln stehen nur als Beispiel für Material abtragende Werkzeuge. Es ist im Rahmen der Erfindung möglich, beispielsweise auch Drähte einzusetzen, die an ihrer Oberfläche Diamantsplitter aufweisen, so dass durch geeignete Bewegungen eines solchen Drahtes die Materialabtragung erreicht werden kann.

Schließlich ist es auch möglich, den Antrieb für die Bewegung des Aktors 20 über eine andere Energiequelle zu bewerkstelligen, also einen Federantrieb oder einen elektrischen, batteriegetriebenen Antrieb einzusetzen.

## Patentansprüche

1. Vorrichtung zur dosierten Abgabe kleinerer Mengen eines Stoffes mit einem Gehäuse für den Stoff und einer nach außen führenden Öffnung für die Abgabe des Stoffes, wobei der Stoff selbst als Gehäuse ausgebildet ist und die Form eines Blockes (10) mit einer solchen Größe hat, dass er von der Hand einer Person wenigstens teilweise umfassbar oder in der Hand zu halten ist, der Block außen mit einer festen Oberfläche (11) ausgebildet ist und dass über die Öffnung (13) des Blockes ein Aktor (20) einführbar und eingesetzt ist, der über einen Schab-, Stoß- oder Reibungseingriff (24) mit dem Inneren des Blocks (10) und/oder mit die Öffnung umgebenden Bereichen gewünschte Mengen des Stoffes freisetzt und freigibt **dadurch gekennzeichnet dass** der Stoff Speisesalz ist und der Block (10) aus einem massiven Speisesalzkörper gebildet ist, der entweder seine natürlich Gestalt hat oder in eine andere gewünschte Form (z.B. die eines Eies) gebracht worden ist.

2. Vorrichtung Anspruch 1, **dadurch gekennzeichnet, dass** der Aktor (20) mit einer Lichtquelle versehen ist.

3. Vorrichtung nach einem der Ansprüche 1 oder 2, **dadurch gekennzeichnet, dass** die Lichtquelle eine Licht emittierende Diode ist.

## Claims

1. Device for the metered dispensing of small amounts of a material comprising a housing for the material and an opening leading to the outside for dispensing the material, wherein the material itself is formed as the housing and has the shape of a block (10) comprising such a size that it can be enclosed at least partially by the hand of a person or can be held in the hand, the block is formed with a firm surface (11) on the outside, and an actuator (20) can be and is inserted through the opening (13) of the block, which actuator removes and releases desired amounts of the material by means of a scraping, pushing or frictional engagement (24) with the inside of the block (10) and/or with areas surrounding the opening, **characterised in that** the material is cooking salt and that the block (10) is formed by a solid cooking salt body, which either has its natural formation or has been brought into another desired shape (for example that of an egg).

2. Device according to claim 1, **characterised in that** the actuator (20) is provided with a light source.

3. Device according to one of the claims 1 or 2, **characterised in that** the light source is a light emitting diode.

## Revendications

1. Dispositif de distribution dosée de petites quantités de matière, comportant un boîtier pour la matière et un orifice ouvert vers l'extérieur destiné à la distribution de la matière, où la matière elle-même constitue le boîtier et présente la forme d'un bloc (10) de dimension telle qu'il puisse être entouré au moins partiellement ou tenu par la main d'une personne, le bloc possédant une surface extérieure (11) ferme, et où un outil (20) peut être engagé et inséré dans l'orifice (13) dans le bloc pour libérer et dégager les quantités souhaitées de matière par une action de grattage, de broyage ou de frottement exercée sur l'intérieur du bloc (10) et/ou sur les zones entourant l'orifice, **caractérisé en ce que** la matière est du sel alimentaire et que le bloc (10) est constitué d'un corps solide de sel alimentaire qui soit présente sa forme naturelle, soit a reçu une autre forme souhaitée (par exemple la forme d'un oeuf).

2. Dispositif selon la revendication 1, **caractérisé en ce que** l'outil (20) est équipé d'une source ce lumière.

3. Dispositif selon l'une des revendications 1 et 2 **caractérisé en ce que** la source de lumière est constituée d'une diode émettant de la lumière.
